# EUROPEAN PATENT APPLICATION

(11) **EP 4 622 277 A1**
(43) Date of publication of application: **24.09.2025**
(21) Application number: 23890720.8
(22) Date of filing: 13.11.2023
(51) Int. Cl.: H04N 21/44, G06Q 30/0241

(54) **VIDEO PROCESSING METHOD AND APPARATUS, ELECTRONIC DEVICE, AND STORAGE MEDIUM**

(30) Priority: 14.11.2022 CN 202211426333
(71) Applicant: Beijing Zitiao Network Technology Co., Ltd., Beijing 100190 (CN)
(72) Inventor: WEN, Jiawei, Beijing 100028 (CN); GUO, Hengkai, Beijing 100028 (CN); XIA, Jizhe, Beijing 100028 (CN); ZHU, Shengnan, Beijing 100028 (CN)
(74) Representative: Marks & Clerk LLP
(86) International application number: PCT/CN2023/131208
(87) International publication number: WO 2024/104286

(57) **Abstract**

The present invention relates to a video processing method, comprising: building an object material resource library used for storing objects, attribute information, materials, description information and correspondence relationships thereof; building a source video resource library used for storing source videos, placeable regions, feature tags and correspondence relationships thereof; on the basis of a matching rule, matching a source video suitable for placement and a target placeable region of the source video for a target object, or matching an object suitable for placement and a material of the object for a target source video; and placing the material of the object to the placeable region of the source video to obtain a synthesized video. The present invention realizes the automatic placement of a matched object in a source video, thereby reducing labor cost, and improving the video processing efficiency.

## Description

### CROSS REFERENCE TO RELATED APPLICATIONS

The present application is based on and claims priority from CN Patent Application No. 202211426333.1 entitled "VIDEO PROCESSING METHOD AND APPARATUS, ELECTRONIC DEVICE AND STORAGE MEDIUM" and filed on November 14, 2022, the disclosure of which is incorporated by reference herein in its entirety.

### TECHNICAL FIELD

The present invention relates to the field of information processing, in particular to a video processing method and apparatus, an electronic device and a storage medium.

### BACKGROUND

Video is one of the most important information spreading on the Internet. By implanting some information in the video information, the functions in different application scenarios may be realized. Information associated with the video content may be implanted in the video to explain and describe the video content. For example, the implanted video information in education and training scenarios may enhance the learning effect. Some jump links may also be implanted, for example, transactions may be realized during the video viewing process by implanting product trading links in real-time videos in some live-streaming scenarios. Advertising may also be implanted, for example, brand and product promotion may be realized by implanting the advertising information in various video resources. At present, they all need to manually process a video for information implantation.

### SUMMARY

In order to realize information implantation in a video more efficiently and intelligently, the present invention provides a video processing method and apparatus, an electronic device, a storage medium and a computer program.

According to one aspect of the present invention, a video processing method is provided. The method comprises: determining at least one material and the description information of the material for a target object in response to receiving a first request for the target object, where the first request is a request to perform information spreading for the target object, the target object has attribute information, the material has description information, and the description information is used for representing a feature of the material; determining at least one source video for a target object based on a first matching rule, where the at least one source video includes at least one target implantable area, and the at least one target implantable area is matched with at least one material of the target object; and generating a synthesized video by implanting the material of the target object into the target implantable area of the source video matched therewith.

According to another aspect of the present invention, a video processing method is provided. The method comprises: determining an implantable area in the target source video and a feature label corresponding to the implantable area in response to receiving a processing request for a target source video; where the processing request is a request to perform object implantation for the target source video; and the feature label is used for representing a feature of the implantable area; determining at least one implantable object for the target source video based on a second matching rule, where the implantable object includes at least one target material, and the target material is matched with at least one implantable area in the target source video; and generating a synthesized video by implanting the material of the target object into the target implantable area of the source video matched therewith.

According to another aspect of the present invention, a video processing apparatus is provided. The apparatus comprises: a first determining module configured to determine at least one material and the description information of the material for a target object in response to receiving a first request for the target object, where the first request is a request to perform information spreading for the target object, the target object has attribute information, the material has description information, and the description information is used for representing a feature of the material; a first matching module configured to determine at least one source video for a target object based on a first matching rule, where the at least one source video includes at least one target implantable area, and the at least one target implantable area is matched with at least one material of the target object; and a synthesizing module configured to generate a synthesized video by implanting the material of the target object into the target implantable area of the source video matched therewith.

According to another aspect of the present invention, a video processing apparatus is provided. The apparatus comprises: a first determining module configured to determine an implantable area in the target source video and a feature label corresponding to the implantable area in response to receiving a processing request for a target source video; where the processing request is a request to perform object implantation for the target source video; and the feature label is used for representing a feature of the implantable area; a second matching module configured to determine at least one implantable object for the target source video based on a second matching rule, where the implantable object includes at least one target material, and the target material is matched with at least one implantable area in the target source video; and a synthesizing module configured to generate a synthesized video by implanting the material of the target object into the target implantable area of the source video matched therewith.

According to another aspect of the present invention, an electronic device is provided. The electronic device comprises: at least one processor; a memory for storing instructions executable by the at least one processor; where the at least one processor is configured to execute the instructions to implement the method according to any of the content described previously.

According to another aspect of the present invention, a computer-readable storage medium is provided. The computer-readable storage medium has a computer program stored thereon, characterized in that when the computer program is executed by a processor, the method according to any of the content described previously is implemented.

According to another aspect of the present invention, a computer program product is provided. The computer program product includes a computer program, characterized in that the computer program, when executed by a processor, implements the method according to any of the content described previously.

According to the technical solution provided in the embodiment of the application, it is possible to automatically identify an implantable area of the source video and match a target material of the implantable object based on a feature label of the implantable area, and automatically identify an implantable source video for the material of the target object and match a target implantable area of the source video for the material of the target object. The source video and the object may be matched bidirectionally to obtain a synthesized video, which is recommended to the user based on the video interest of the user. It is possible to not only realize automatic implantation of the source video, reduce the labor cost and enhance the processing efficiency, but also realize video recommendation according to the interest of the user and obtain commercial benefits.

### BRIEF DESCRIPTION OF THE DRAWINGS

Further details, features and advantages of the present invention will be disclosed in the following description of exemplary embodiments in conjunction with the accompanying drawings, in which:
Fig. 1 is a system architecture view provided by one exemplary embodiment of the present invention;
Fig. 2 is a schematic view of an application scenario provided by one exemplary embodiment of the present invention;
Fig. 3 is a schematic block diagram of a video processing platform provided by one exemplary embodiment of the present invention;
Fig. 4 is a flow chart of a video processing method provided by one exemplary embodiment of the present invention;
Fig. 5 is a flow chart of a video processing method provided by one exemplary embodiment of the present invention;
Fig. 6 is a flow chart of a video preprocessing method provided by one exemplary embodiment of the present invention;
Fig. 7 is a flow chart of a video recommendation method provided by one exemplary embodiment of the present invention;
Figs. 8A and 8B are schematic block diagrams of functional modules of a video processing device provided by two exemplary embodiments of the present invention, respectively;
Fig. 9 is a structural block diagram of an electronic device provided by one exemplary embodiment of the present invention;
Fig. 10 is a structural block diagram of a computer system provided by one exemplary embodiment of the present invention.

### DETAILED DESCRIPTION

The embodiments of the present invention will be described in more detail below with reference to the accompanying drawings. Although the accompanying drawings illustrate some embodiments of the present invention, it should be understood that the present invention may be implemented in various forms, and should not be construed as being limited to the embodiments set forth herein. Rather, these embodiments are provided for a more thorough and complete understanding of the present invention. It should be understood that the accompanying drawings and embodiments of the present invention are only for illustrative purposes, rather than for limiting the protection scope of the present invention.

It should be understood that various steps recited in the method embodiments of the present invention may be performed according to different sequences, and/or performed in parallel. In addition, the method embodiments may include additional steps and/or omit to perform the illustrated steps. The scope of the present invention is not limited in this respect.

As used herein, the term "including" and its variants are open-ended inclusion, that is, "including but not limited to". The term "based on" means "at least partially based on". The term "one embodiment" means "at least one embodiment"; the term "another embodiment" means "at least one additional embodiment"; and the term "some embodiments" means "at least some embodiments". The related definitions of other terms will be given in the following description. It is to be noted that the concepts such as "first" and "second" mentioned in the present invention are only used to distinguish different devices, modules or units, but not to define the sequence or interdependence of functions performed by these devices, modules or units.

It is to be noted that the modifications of "one" and "a plurality of' mentioned in the present invention are illustrative rather than restrictive, and those skilled in the art should understand that they should be understood as "one or more" unless contextually specified otherwise.

The names of messages or information exchanged between multiple devices in the embodiments of the present invention are only intended for illustrative purposes, but not for limiting the scope of these messages or information.

The block diagrams shown in the accompanying drawings which are only functional entities, do not necessarily have to correspond to physically independent entities. That is, these functional entities may be implemented in the form of software, or in one or more hardware modules or integrated circuits, or in different networks and/or processor devices and/or microcontroller devices.

The flow charts shown in the accompanying drawings which are only illustrative, do not necessarily include all the contents and operations/steps, and do not have to be performed in the described sequence. For example, some operations/steps may also be decomposed, while other operations/steps may be composed or partially composed so that actual performing sequence might change according to actual conditions.

Before introducing the embodiment of the present invention, first of all, the related terms involved in the embodiment of the present invention will be explained as follows:

For a video, the basic structure is a hierarchical structure composed of frames, shots, scenes and video programs, where the frame is a static image, which is the smallest logical unit that constitutes a video. A sequence of frames that are temporally continuous are consecutively played at equal intervals to form a dynamic video.

A shot, which is a sequence of frames consecutively shot by a camera from power-on to power-off, depicts a part of an event or a scene, without or with weak semantic information, and emphasizes the similarity of visual contents that constitute frames.

A scene, which consists in consecutive shots with semantic relevance, may be shot from different angles and different techniques of the same object, and may also be a combination of shots with the same subject and events, which emphasizes semantic relevance.

A video program, which contains a complete event or story as the highest-level video content structure, includes a constitution relationship of videos and the summary, semantics and general description of the video.

For semantic segmentation, a semantic label is assigned to each pixel in an image so as to identify different categories of objects.

For instance segmentation, a location area in which an object is presented is first determined in an image, and a category of the object is then identified.

For panoramic segmentation, all the objects including background in an image are detected and segmented.

For the visual SLAM (Simultaneous localization and Mapping) technology, the visual SLAM view resolves that location and mapping are realized by using the visual information obtained by a visual sensor, that is, observing a motion trajectory of itself and reconstructing an environmental map.

For 3D scene analysis, a scene in a video is determined, and an area suitable for placing 3D materials in the scene is analyzed by combining the plane recognition technology.

Hereinafter, the solution of the present invention will be described with reference to the accompanying drawings, which are specifically as follows:

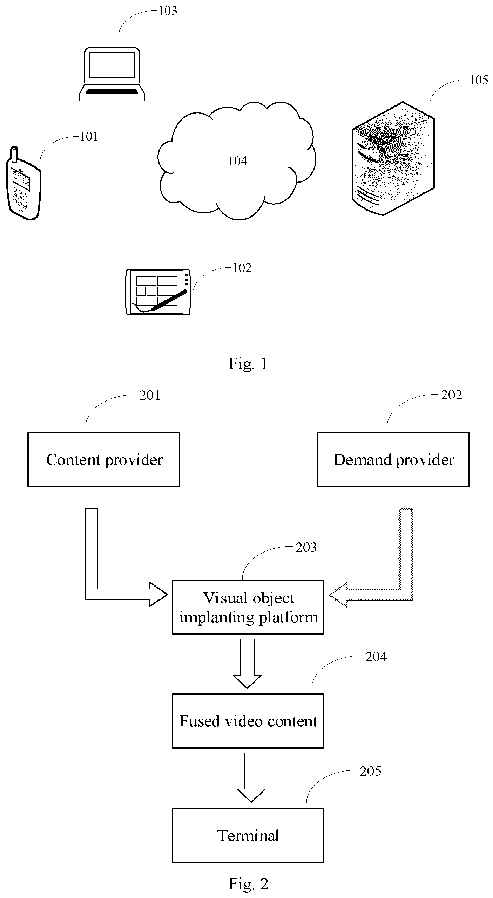

Fig. 1 shows a schematic view of an exemplary system architecture to which the technical solution of the embodiment of the present invention may be applied.

As shown in Fig. 1, the system architecture may include a terminal (for example, one or more of a smart phone 101, a tablet computer 102 and a portable computer 103 shown in Fig. 1, and certainly also a desktop computer and the like), a network 104 and a server 105. The network 104 is a medium for providing a communication link between the terminal device and the server 105. The network 104 may include various connection types, such as wired communication links and wireless communication links.

It should be understood that, the numbers of terminals, networks and servers in Fig. 1 are only schematic. There may be any number of terminals, networks and servers according to actual needs. For example, the server 105 may be a server cluster consisting of a plurality of servers.

In an exemplary scenario, the terminal sends a request for providing a video to the server 105, and the server 105 sends a corresponding video or an interactive interface where a video is accessible for the terminal to the terminal based on a preset video providing strategy in response to the request.

Fig. 2 shows an application scenario view to which the technical solution of the embodiment of the present invention is applied.

As shown in Fig. 2, the video service system includes a video provider 201, an object provider 202, a video processing platform 203 and a terminal 204. The video provider provides various source videos to the video processing platform, such as off-line videos or real-time videos, which may be for example, movies, animations, documentaries, popular science knowledge, short videos, live videos and the like. The video provider may be an original party of the source video, such as the author, or an authorized party of the source video, such as the video platform. The object provider provides the video processing platform with requirements for spreading the target object, such as brand promotion requirements, product promotion requirements, or information publishing requirements, and the object provider may be a brand owner, a product supplier, a seller, media and the like. The video processing platform performs video processing based on the source video obtained from the video provider and the target object to be spread obtained from the object provider, and obtains a video fused with the source video and the target object, and provides the fused video to the terminal based on the video request of the terminal.

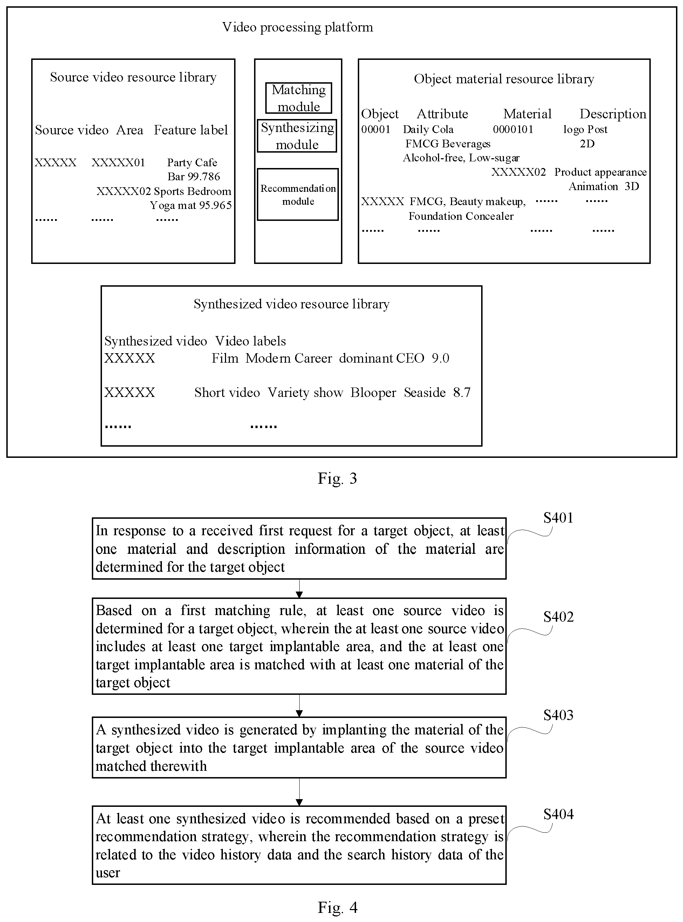

Fig. 3 shows a schematic block diagram of a video processing platform according to an embodiment of the present invention.

As shown in Fig. 3, the video processing platform processes the received source videos and forms a source video resource library. For each source video, at least one implantable area is obtained, and for each implantable area, a feature label is formed. The source video resource library stores a source video, an implantable area, a feature label and their correspondence relationships corresponding to each source video. The video processing platform maintains an object material resource library for a specified object, where each object specified by the object provider is configured with the attribute information of the object, a corresponding material and the description information of the material. For example, as shown in Fig. 3, for the product object with the object ID of 00001, the attribute information may include the name of the product (for example, "Daily Cola"), a plurality of category information of the product (for example, Fast Moving Consumer Goods (FMCG), beverage, alcohol-free, low-sugar and the like) and other attribute information, for example, shelf life or the like. The product object is configured with a plurality of materials, and each material has corresponding description information, which may include, for example, the content, expression form, 2D or 3D of the materials. The video processing platform has a matching module, a synthesizing module and a recommendation module, and is correspondingly configured with matching rules and recommendation strategies. The matching module is configured to match the source video and its area with a specified object and its material according to the matching rules, so as to obtain basic materials for video synthesis. The synthesizing module performs video synthesis, so that a synthesized video is stored in a synthesized video resource library. The recommendation module is configured to recommend at least one synthesized video based on a recommendation strategy.

The material saved in the object material resource library may be the material itself, and as shown in Fig. 3, may also be an identifier of the material or a link to the material. The material may come from the object provider, and may also be produced based on a specified object according to the needs of the object provider or obtained from other channels. Similarly, the source video and the implantable area saved in the source video resource library may be the source video or the implantable area itself, and may also be a corresponding identifier or a corresponding link. The video saved in the synthesized video resource library may be the synthesized video itself or the corresponding identifier or the corresponding link.

The video processing platform may be a centralized server architecture or a separate server system architecture, and these should not become restricting the present invention.

Fig. 4 shows a flow chart of a video processing method provided by one exemplary embodiment of the present invention.

As shown in Fig. 4, the method includes:
in S401, determining at least one material and description information of the material for the target object in response to receiving a first request for a target object, where the first request is a request to perform information spreading for the target object, the target object has attribute information, the material has description information, and the description information is configured to represent a feature of the material.

The first request may include a material of the target object, or the first request may include the material demand information of the target object, where a corresponding material may be determined for the target object through the material demand information.

The target object, the attributes of the target object, the corresponding material and the description information of the material as well as the mapping relationship therebetween may be saved in the object material library. In some embodiments, the object material resource library is shown in Fig. 3. The target object has at least one attribute information and at least one material, and each material has corresponding description information for representing a feature of the material.

The attribute information of the target object may include multiple dimensions of information, including but not limited to the name, category, composition/material, function/efficiency, appearance, structure, usage, introduction and the like of the target object.

The description information of the material may include multiple dimensions of information, including but not limited to the content, form, 2D/3D, image/video, scene, plot and the like of the material.

Taking a target object that is a bottled beverage as an example, the material may include the brand of the beverage, the product image of the beverage, the 2D poster containing the beverage with a scene theme of a party, the static 3D product image of the beverage, the 3D animation image of the beverage (for example, the bottle twisting animation) and so on.

Taking a target object that is an enterprise as an example, the material may include the name and brand of the enterprise, the business provided by the enterprise, the promotion short video of the enterprise, the 3D material of the building places of the enterprise and the like.

The target object, the attribute information, the material and the description information of the material as well as the mapping relationship therebetween may be saved in the object material resource library.

The attribute information of the target object and the description information of the material may be obtained by multiple methods. For example, they may be directly provided by the target object provider or the material provider, or manually or automatically extracted by the video processing platform. Different types of attribute information or different types of description information may be set to facilitate manual input, and automatic extraction may also be performed based on a machine model. For example, by means of a decision tree, the target object is determined from a root node of the decision tree, layer by layer to each leaf node, and each leaf node corresponds to an attribute value or description information. The attribute information and the description information may also be automatically extracted from the target object based on a semantic algorithm. In some embodiments, the attribute information and the description information may be extracted from the target object based on a semantic model trained in advance.

Semantic algorithm and decision tree pertain to artificial intelligence algorithms commonly used in this field, which will not be described in detail here.

In S402, determining at least one source video for a target object based on a first matching rule, where the at least one source video includes at least one target implantable area, and the at least one target implantable area is matched with at least one material of the target object.

The source video, the implantable area of the source video and the feature label of the implantable area as well as the mapping relationship therebetween may be saved in the source video resource library. In some embodiments, the source video resource library is shown in Fig. 3. The source video has at least one implantable area, and each implantable area has a corresponding feature label for representing a feature of the implantable area.

The source video may be an off-line video or a real-time video. The implantable area of the video may be an area within the meaning of space, for example, the sky and the ground in the video, or an area within the meaning of surface (for example, a plane or a curved surface), for example, a building facade, a billboard, a screen and a cup body of a coffee cup in the video.

The feature labels may include multiple dimensions of information, for example, video classification information, implantable area names (for example, sky, ground, desktop, billboards and the like), scene information (for example, parties, sports and the like), location information (for example, cafes, airports, bedrooms and the like), and multiple image feature information of the implantable area (for example, confidence, definition, size and the like).

In some embodiments, the feature label includes a video feature label corresponding to the source video and an area feature label corresponding to the implantable area. For example, in the source video of the sidelights of a variety show, it includes two implantable areas, in which one is a star-field area, where the feature labels may include variety show, sidelights, night, star-field and the like; and one is a desktop area, where the feature labels may include variety shows, sidelights, competitions, desktops and the like. The labels of the two implantable areas both include the video feature labels of the source video, i.e., variety shows and sidelights.

The feature labels may be obtained by multiple methods. For example, they may be directly provided by the object provider, or manually or automatically extracted by the video processing platform. Different types of feature labels may be set to perform manual configuration, and automatic extraction may also be performed based on a machine model. For example, by means of the decision tree, the source video is determined starting from a root node of the decision tree. Each leaf node corresponds to one feature label. Semantic analysis may also be performed on the source video based on semantic algorithm, so as to automatically extract a feature label.

The first matching rule is related to the feature label of the implantable area, the attribute information of the object and the description information of the material.

In some embodiments, the first matching rule may be a preset mapping relationship. For example, the feature label "party" has a correspondence relationship with the object attribute "beverage", and the feature label "bar" has a correspondence relationship with the description information "product appearance" with the object attribute "beverage". Based on this matching rule, when the target object is a beverage, it may be determined that the implantable area in the source video with feature labels including "party" and "bar" is the target implantable area.

In some embodiments, Step S402 includes:
In Step S4021, a first matching degree between each feature label of the implantable area and each attribute information of the target object is calculated.

The calculation of a matching degree between the feature label and the attribute information is to calculate the similarity between every two feature vectors by using the feature vector corresponding to the feature label and the feature vector corresponding to the attribute information respectively. The calculation of the similarity may use multiple methods, such as Pearson correlation coefficient, Euclidean distance, cosine similarity and dot product similarity. The calculated similarity values are averaged to obtain a first matching degree.

In Step S4022, a second matching degree between each feature label of the implantable area and each description information of the material is calculated.

The calculation of a matching degree between the feature label and the description information is to calculate the similarity between every two feature vectors by using the feature vector corresponding to the feature label and the feature vector corresponding to the description information respectively. The calculation of the similarity may use multiple methods, such as Pearson correlation coefficient, Euclidean distance, cosine similarity and dot product similarity. The calculated similarity values are averaged to obtain a second matching degree.

In Step S4023, the source video and the target implantable area are determined based on the first matching degree and the second matching degree.

In some embodiments, Step S4023 may include: determining a source video based on the first matching degree, and determining a target implantable area from the implantable area in the determined source video based on the second matching degree. The method of determining the source video or the target implantable area based on the matching degree may include sorting the matching degree values and selecting the source video or the implantable area corresponding to a matching degree before a preset ranking. A preset threshold may also be set to determine the source video or the implantable area with a matching degree value higher than a preset threshold.

In some embodiments, the first matching rule further includes determining the target implantable area according to the 2D and 3D classification of the material. When the material is of 2D type, the target implantable area has a label representative of the target implantable area that is a surface, such as a desktop, a building plane, a large screen, a billboard, a mirror, a glass plane and a cup body. When the material is of 3D type, the target implantable area has a label representative of the target implantable area that is a space, such as sky, ground, star-field and canyon.

In S403, a synthesized video is generated by implanting the material of the target object into the target implantable area of the source video matched therewith.

In some embodiments, when the material of the target object is 2D material, the 2D material is implanted into a first target implantable area matched therewith, and the first target implantable area has a label representing that the area is a surface. When the material of the target object is 3D material, the 3D material is implanted into a second target implantable area matched therewith, and the second target implantable area has a label representing that the area is a space, such as sky, ground, room and canyon.

In some embodiments, when the material of the target object is 3D material, the planar image recognition technology may be used to make the 3D model present a corresponding position in the video according to an initial position; and the motion tracking technology may be used to make the 3D model present the content of a corresponding perspective according to a perspective change of the video content.

In some embodiments, Step S403 further includes the step of rendering the synthesized video, including but not limited to raster rendering, ray casting, ray tracing and the like. In some embodiments, when the material is a 3D material, it also includes a neural radiation field (NeRF) rendering.

In some embodiments, after Step S403, it further includes:
In S404, at least one synthesized video is recommended based on a preset recommendation strategy, where the recommendation strategy is related to the video history data and the search history data of the user.

The recommendation of the synthesized video by the video processing platform may be based on the request of the user. For example, when a direct or indirect video obtaining request from the user is obtained, the system recommends at least one synthesized video to the user according to a recommendation strategy. It may also be based on cold start of a preset program or an interface. For example, when the user opens a program or enters a page, it is possible to automatically recommend a video to the user.

The user may send a video obtaining request through the interactive interfaces on some video platforms, for example, clicking "Funny Video" in the interactive interface, and the video obtaining request sent by the user may be directly sent to the video processing platform of the present invention or received by other video platforms, and the request for obtaining a synthesized video may be sent from other video platforms to the video processing platform of the present invention.

It is very easily appreciable that, if the target object included in the synthesized video is a product object from an advertiser, the synthesized video is recommended to be played by the user so that it is possible to bring some commercial interests to the video processing platform, the video source provider or the platform that recommends the video to the user. Therefore, other video platforms might obtain the synthesized video from the video processing platform for the sake of commercial interests.

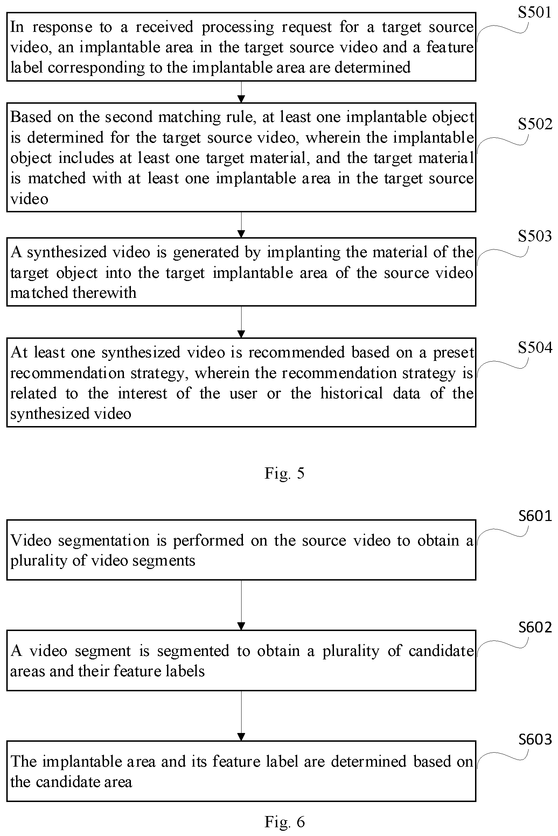

Fig. 5 shows a flow chart of a video processing method provided by one exemplary embodiment of the present invention.

As shown in Fig. 5, the method includes:
In S501, in response to receiving a processing request for a target source video, an implantable area in the target source video and a feature label corresponding to the implantable area are determined; where the processing request is a request to perform object implantation for the target source video; and the feature label is used for representing a feature of the implantable area.

The source video, the implantable area of the source video and the feature label of the implantable area as well as the mapping relationship therebetween may be saved in the source video resource library. In some embodiments, the source video resource library is shown in Fig. 3. The source video has at least one implantable area, and each implantable area has a corresponding feature label for representing a feature of the implantable area.

The source video may be an off-line video or a real-time video. The implantable area of the video may be a background area in the video, for example, the sky and the ground in the video, or an object area in the video, for example, a building facade, a billboard, a screen and a cup body of a coffee cup in the video.

The feature labels may include multiple dimensions of information, for example, video classification information, implantable area names (for example, sky, ground, desktop, billboards and the like), scene information (for example, parties, sports and the like), location information (for example, cafes, airports, bedrooms and the like), and multiple image feature information of the implantable area (for example, confidence, definition, size and the like).

In some embodiments, the feature label includes two parts, in which one part is a feature label corresponding to the source video, and another part is a feature label corresponding to the implantable area. For example, in the source video of the sidelights of a variety show, it includes two implantable areas, in which one is a star-field area, where the feature labels may include variety show, sidelight, night, star-field and the like; and another one is a desktop area, where the feature labels may include variety shows, sidelights, competitions, desktops and the like. The labels of the two implantable areas both include the feature labels of the source video, i.e., variety shows and sidelights.

The feature labels may be obtained by multiple methods. For example, they may be directly provided by the object provider, or manually or automatically extracted by the video processing platform. Different types of feature labels may be set to perform manual configuration, and automatic extraction may also be performed based on a machine model. For example, by means of the decision tree, the source video is determined starting from a root node of the decision tree. Each leaf node corresponds to one feature label. Semantic analysis may also be performed on the source video based on semantic algorithm, so as to automatically extract a feature label.

In S502, based on the second matching rule, at least one implantable object is determined for the target source video, where the implantable object includes at least one target material, and the target material is matched with at least one implantable area in the target source video.

The target object, the attributes of the target object, the corresponding material and the description information of the material as well as the mapping relationship therebetween may be saved in the object material library. In some embodiments, the object material resource library is shown in Fig. 3. The target object has at least one attribute information and at least one material, and each material has corresponding description information for representing a feature of the material.

The attribute information of the object may include multiple dimensions of information, including but not limited to the name, category, composition/material, function/efficiency, appearance, structure, usage, introduction and the like of the target object.

The description information of the material may include multiple dimensions of information, including but not limited to the content, form, 2D/3D, image/video, scene, plot and the like of the material.

Taking a target object that is a bottled beverage as an example, the material may include the brand of the beverage, the product image of the beverage, the 2D poster containing the beverage with a scene theme of a party, the static 3D product image of the beverage, the 3D animation image of the beverage (for example, the bottle twisting animation) and so on.

Taking a target object that is an enterprise as an example, the material may include the name and brand of the enterprise, the business provided by the enterprise, the promotion short video of the enterprise, the 3D material of the building places of the enterprise and the like.

The target object, the attribute information, the material and the description information of the material as well as the mapping relationship therebetween may be saved in the object material resource library.

The attribute information of the target object and the description information of the material may be obtained by multiple methods. For example, they may be directly provided by the target object provider or the material provider, or manually or automatically extracted by the video processing platform. Different types of attribute information may be set to perform manual filling, and automatic extraction may also be performed based on a machine model. For example, by means of the decision tree, the target object is determined step by step, and each leaf node corresponds to a description. Big data analysis may also be performed on a description related to the target object based on semantic algorithm, so as to automatically extract the description information.

Semantic algorithm and decision tree pertain to artificial intelligence algorithms commonly used in this field, which will not be described in detail here.

The second matching rule is related to the feature label of the implantable area, the attribute of the object and the description information of the material.

In some embodiments, the second matching rule may be a preset mapping relationship. For example, there is a correspondence relationship between the feature label "self-driving" and the object attributes such as "vehicle", "tire", "satellite navigation" and "refreshing", and there is a correspondence relationship between the feature label "night sky" and the material having the description "3D" with the object attribute "satellite navigation". Based on this matching rule, when the target source video is a night field self-driving video, it may be determined for the source video that the target object is a satellite field escort service, and the 3D material included therein is suitable for implantation in the night sky area of the self-driving video.

Based on the second matching rule, at least one implantable object is determined for the target source video, where the implantable object includes at least one target material, and the target material is matched with at least one implantable area in the target source video.

In some embodiments, the second matching rule may be a preset semantic model, including:
In Step S5021, a third matching degree between each feature label of the target source video area and each attribute information of the implantable object is calculated.

The calculation of a matching degree between the feature label and the attribute information is to calculate the similarity between every two feature vectors by using the feature vector corresponding to the feature label and the feature vector corresponding to the attribute information respectively. The calculation of the similarity may use multiple methods, such as Pearson correlation coefficient, Euclidean distance, cosine similarity and dot product similarity. The calculated similarity values are averaged to obtain a third matching degree.

In Step S5022, a fourth matching degree between each feature label of the implantable area of the target source video and each description information of the material of the implantable object is calculated.

The calculation of a matching degree between the feature label and the description information is to calculate the similarity between every two feature vectors by using the feature vector corresponding to the feature label and the feature vector corresponding to the description information respectively. The calculation of the similarity may use multiple methods, such as Pearson correlation coefficient, Euclidean distance, cosine similarity and dot product similarity. The calculated similarity values are averaged to obtain a fourth matching degree.

In Step S5023, the implantable object and the target material are determined based on the third matching degree and the fourth matching degree.

In some embodiments, Step S5023 may include: determining an implantable object based on a third matching degree, and determining a target material from the material of the determined implantable object based on a fourth matching degree. The method of determining the implantable object or the target material based on the matching degree may include sorting the matching degree values and selecting the implantable object or the target material corresponding to a matching degree before a preset ranking. A preset threshold may also be set to determine the implantable object or the target material with a matching degree value higher than a preset threshold.

In some embodiments, the third matching rule further includes: when the label of the implantable area represents that the target implantable area is a surface area, such as a desktop, a building plane, a large screen, a billboard, a mirror, a glass plane and a cup body, a 2D material is selected from the implantable object. When the label of the implantable area represents that the area is a spatial area, a 3D material or a space is selected from the implantable object, to determine the 2D and 3D classification of the material so as to determine the target implantable area. When the material is of 2D type, the target implantable area has a label representative of that the target implantable area that is a surface. When the material is of 3D type, the target implantable area such as sky, ground, star-field and canyon has a label representative of the target implantable areas that is space.

In some embodiments, the second matching rule may be a matching degree algorithm. The matching degree value between the feature label of the source video, the attribute of the target object and the description of the material is calculated based on the matching degree algorithm. The target implantable area of the source video is determined based on the matching degree value. For example, it is possible to sort the matching degree values, and select the implantable area before a preset ranking as the target implantable area. A preset threshold may also be set to determine that the implantable area with a matching degree higher than a preset threshold is the target implantable area.

In some embodiments, the second matching rule further includes determining the target implantable area according to the 2D and 3D classification of the material. When the material is of 2D type, the target implantable area has a label representative of the target implantable area that is a plane, such as a desktop, a building plane, a large screen, a billboard, a mirror and a glass plane. When the material is of 3D type, the target implantable area has a label representative of the target implantable area that is a space, such as sky, ground, star-field and canyon.

The target object, the attribute information of the target object, the configured material and the description information of the material, as well as the mapping relationship therebetween are saved in the object material resource library.

In S503, a synthesized video is generated by implanting the material of the target object into the target implantable area of the source video matched therewith.

In some embodiments, when the material of the target object is 2D material, the 2D material is implanted into a first target implantable area matched therewith, and the first target implantable area has a label representing that the area is a surface. When the material of the target object is 3D material, the 3D material is implanted into a second target implantable area matched therewith, and the second target implantable area has a label representing that the area is a space, such as sky, ground, room and canyon.

In some embodiments, Step S503 further includes the step of rendering the synthesized video, where video rendering includes but is not limited to raster rendering, ray casting, ray tracing and the like. In some embodiments, when the material is a 3D material, it also includes a neural radiation field (NeRF) rendering.

In some embodiments, after Step S503, it further includes:
In S504, at least one synthesized video is recommended based on a preset recommendation strategy, where the recommendation strategy is related to the interest of the user or the historical data of the synthesized video.

The recommendation of the synthesized video by the video processing platform may be based on the request of the user. For example, when a direct or indirect video obtaining request from the user is obtained, the system recommends at least one synthesized video to the user according to a recommendation strategy. It may also be based on cold start of a preset program or an interface. For example, when the user opens a program or enters a page, it is possible to automatically recommend a video to the user.

The user may send a video obtaining request through the interactive interfaces on some video platforms, for example, clicking "Funny Video" in the interactive interface, and the video obtaining request sent by the user may be directly sent to the video processing platform of the present invention or received by other video platforms, and the request for obtaining a synthesized video may be sent from other video platforms to the video processing platform of the present invention.

It is very easily appreciable that, if the target object included in the synthesized video is a product object from an advertiser, the synthesized video is recommended to be played by the user so that it is possible to bring some commercial interests to the video processing platform, the video source provider or the platform that recommends the video to the user. Therefore, other video platforms might obtain the synthesized video from the video processing platform for the sake of commercial interests.

Fig. 6 is a flow chart of a video preprocessing method provided by one exemplary embodiment of the present invention.

In the above-described method, it further includes preprocessing the source video to obtain at least one implantable area and its corresponding feature label. As shown in Fig. 6, the preprocessing method of the source video includes:
In S601, video segmentation is performed on the source video to obtain a plurality of video segments.

A video segment includes many consecutive frames. In order to effectively identify the implantable area, video segmentation may be performed on the source video to obtain video segments.

The video segmentation methods include but are not limited to shot segmentation and similarity segmentation; where shot segmentation takes a shot as a processing unit, that is, taking each shot as a video segment. Similarity segmentation is to calculate the similarity between adjacent frames and segment the video based on preset similarity conditions so as to obtain different video segments.

In some embodiments, the step of preprocessing the video based on that the source video that is an off-line video or a real-time video includes:
When the source video is an off-line video, the source video is based on shot segmentation or similarity segmentation; and
When the source video is a real-time video, the source video is based on shot segmentation.

In S602, a video segment is segmented to obtain a plurality of candidate areas and their feature labels.

The target frame may be selected from the video segment so that segmentation processing is performed on the target frame. The segment methods include but are not limited to semantic segmentation, instance segmentation, panoramic segmentation and any combination.

In some embodiments, the candidate areas of the target frame and the label information of each candidate area may be obtained by instance segmentation, where the label information may include image classification information, confidence and the like corresponding to an area. The corresponding instance segmentation model may be used to realize instance segmentation, and the image frame may be used as a training sample to train the instance segmentation model.

In some embodiments, the candidate areas of the target frame and the scene labels of each candidate area may be obtained by panoramic segmentation, and the scene labels are determined based on the candidate areas of the target frame and the association relationship between each candidate area in the target frame. For example, when the candidate areas of the target frame are sky, ocean, beach and awning, the scene label may be holiday, seaside and beach.

In S603, the implantable area and its feature label are determined based on the candidate area.

In some embodiments, the implantable area in the source video is determined by clustering the candidate areas of the target frame. For example, the candidate area with a confidence exceeding a preset threshold is selected as an implantable area. For example, the implantable area is determined by clustering according to an area value or areal connectivity.

In some embodiments, the implantable area of the source video is determined by performing a maximum rectangular search on the candidate area of the target frame. For example, the core area with a maximum area and a blank area is selected as the implantable area. For example, a planar area and a spatial area are selected, for example, a table top and facade of a cashier, a bench surface of a bench, a running belt of a treadmill and the like.

Steps S601-S603 may serve as specific implementations of determining the implantable area and the feature label corresponding to the implantable area in the target source video in Step S501. It is possible to be completed before Step S402 to determine the implantable area of the source video, so as to determine the target implantable area matched with the material therefrom in Step S402.

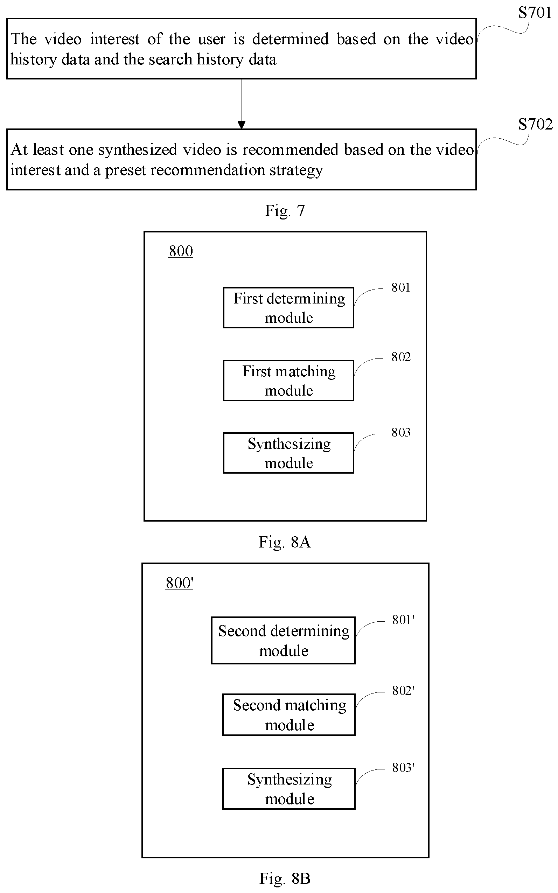

Fig. 7 is a flow chart of a video recommendation method provided by one exemplary embodiment of the present invention.

As shown in Fig. 7, Steps S404 and S504 in the aforementioned method further include:
In S701, the video interest of the user is determined based on the video history data and the search history data.

With the authorization of the user, the video history data and the search history data of the user are obtained, where the video history data includes information such as the source, type, duration and frequency of the video viewed by the user, and the search history data includes video-related search data generated by the user, for example, including searched video keywords, click, viewing information and the like.

Based on the above-described historical data, the video interest of the user is determined. The determining method may be, for example, a deep learning model. The deep learning model is trained based on a large amount of video historical data and search historical data samples, and the above-described historical data is analyzed by using the trained learning model to determine the video interest of the user.

In S702, at least one synthesized video is recommended based on the video interest and a preset recommendation strategy.

The synthesized video, the video label as well as the mapping relationship therebetween may be saved in a synthesized video resource library. In some embodiments, the synthesized video resource library is shown in Fig. 3. The synthesized video has at least one video label, and the video label is used for representing a feature of the synthesized video.

The video labels may include multiple dimensions of information, including but not limited to name of the synthesized video (for example, the name of the source video may be used), video classification (for example, a plurality of classification methods such as theme classification, ancient/modern and reality/science fiction), video profile and rating.

The video labels which may be obtained by multiple methods, may use the labels of the source video, and may also be regenerated. They may be directly provided by the video provider, and it is also possible to automatically extract a video manually or automatically from the video processing platform. Different types of video labels may be set to perform manual filling, and automatic extraction may also be performed based on a machine model. For example, by means of the decision tree, the video is determined step by step. Each leaf node corresponds to one feature label. The video labels may also be extracted based on semantic algorithm.

Based on the video interest and the recommendation strategy, at least one synthesized video is selected for recommendation, and the relationship between the video label of the synthesized video and the video interest satisfies the recommendation strategy.

In the case where each functional module is divided according to each function, the embodiment of the present invention provides a video processing device, which may be a server or a chip applied to the server. Fig. 8A is a schematic block diagram of functional modules of a video processing device provided by one exemplary embodiment of the present invention. As shown in Fig. 8A, the device 800 includes:
A first determining module 801 configured to determine at least one material and description information of the material for the target object in response to receiving a first request for a target object, where the first request is a request to perform information spreading for the target object, the target object has attribute information, the material has description information, and the description information is used for representing a feature of the material;
A first matching module 802 configured to determine at least one source video for a target object based on a first matching rule, where the at least one source video includes at least one target implantable area, and the at least one target implantable area is matched with at least one material of the target object; and
A synthesizing module 803 configured to generate a synthesized video by implanting the material of the target object into the target implantable area of the source video matched therewith.

Fig. 8B is a schematic block diagram of functional modules of a video processing device provided by one exemplary embodiment of the present invention. As shown in Fig. 8B, the device 800 includes:
A second determining module 801' configured to determine an implantable area in the target source video and a feature label corresponding to the implantable area in response to receiving a processing request for a target source video; where the processing request is a request to perform object implantation for the target source video; and the feature label is used for representing a feature of the implantable area;
A second matching module 802' configured to determine at least one implantable object for the target source video based on the second matching rule, where the implantable object includes at least one target material, and the target material is matched with at least one implantable area in the target source video; and
A synthesizing module 803 configured to generate a synthesized video by implanting the material of the target object into the target implantable area of the source video matched therewith.

The embodiment of the present invention also provides an electronic device, which comprises: at least one processor; a memory for storing instructions executable by the at least one processor; where the at least one processor is configured to execute the instructions to implement the above-described method according to the embodiment of the present invention.

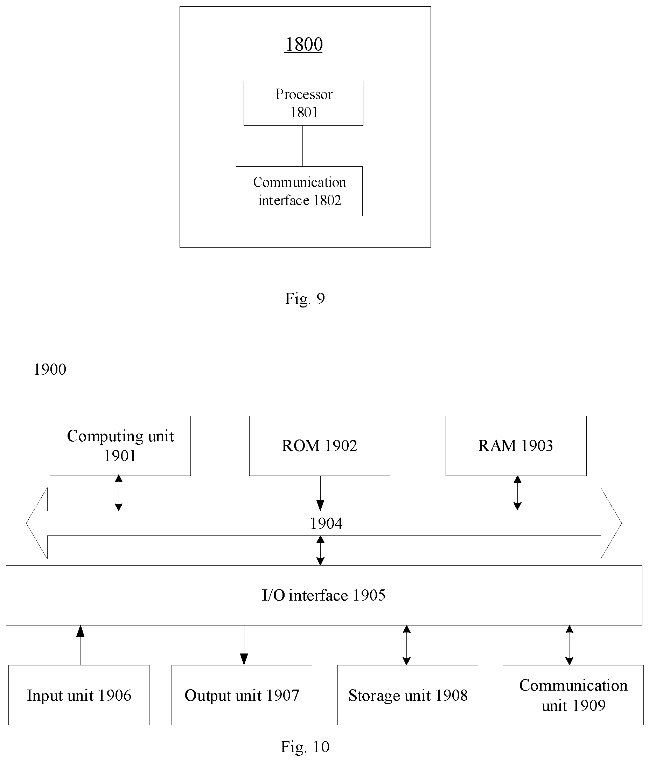

Fig. 9 is a schematic structural view of an electronic device provided by one exemplary embodiment of the present invention. As shown in Fig. 9, the electronic device 1800 includes at least one processor 1801 and a memory 1802 coupled to the processor 1801, and the processor 1801 may perform corresponding steps in the above-described method disclosed in the embodiment of the present invention.

The above-described processor 1801 which may also be referred to as a central processing unit (CPU), may be an integrated circuit chip with signal processing capability. Various steps in the above-described method disclosed in the embodiment of the present invention may be completed by an integrated logic circuit of hardware or an instruction in the form of software in the processor 1801. The above-described processor 1801 may be a general processor, a digital signal processing (DSP), an application specific integrated circuit (ASIC), a field-programmable gate array (FPGA) or other programmable logic devices, discrete gate or transistor logic devices, and discrete hardware assemblies. The general purpose processor may be a microprocessor, or the processor may also be any conventional processor or the like. The steps of the method disclosed in combination with the embodiment of the present invention may be directly embodied as being performed and completed by a hardware decoding processor, or as being performed and completed by a combination of hardware and software modules in the decoding processor. The software modules may be located in the memory 1802, for example, a random access memory, a flash memory, a read-only memory, a programmable read-only memory or an electrically erasable programmable memory, a register and other mature storage media in this field. The processor 1801 reads the information in the memory 1802 and completes the steps of the above-described method in combination with its hardware.

In addition, in the case where various operations/processes according to the present invention are implemented by software and/or firmware, it is possible to install a program constituting the software to a computer system with a dedicated hardware structure, for example, the computer system 1900 shown in Fig. 10, from a storage medium or a network. When the computer system is installed with various programs, it is possible to perform various functions, including the functions described previously. Fig. 10 is a structural block diagram of a computer system provided by one exemplary embodiment of the present invention.

The computer system 1900 is intended to represent various forms of digital electronic computer devices, such as a laptop computer, a desktop computer, a workstation, a personal digital assistant, a server, a blade server, a mainframe computer, and other suitable computers. The electronic device may also represent various forms of mobile devices, such as personal digital processing, a cellular phone, a smart phone, a wearable device and other similar computing devices. The components shown herein, their connections and relationships as well as their functions are only exemplary, and not intended to limit the implementation of the present invention described and/or claimed herein.

As shown in Fig. 10, the computer system 1900 includes a computing unit 1901, which may perform various appropriate actions and processes according to a computer program stored in the read-only memory (ROM) 1902 or a computer program loaded from the storage unit 1908 into the random access memory (RAM)1903. In the RAM 1903, various programs and data required for the operation of the computer system 1900 may also be stored. The computing unit 1901, the ROM 1902 and the RAM 1903 are connected to each other via a bus 1904. The input/output (I/O) interface 1905 is also connected to the bus 1904.

A plurality of components in the computer system 1900 are connected to the I/O interface 1905, which include an input unit 1906, an output unit 1907, a storage unit 1908 and a communication unit 1909. The input unit 1906 may be any type of device that may input the information to the computer system 1900, and the input unit 1906 may receive the input numeric or character information and generate key signal input related to user setting and/or function control of the electronic device. The output unit 1907 may be any type of device capable of presenting information, and may include but is not limited to a display, a speaker, a video/audio output terminal, a vibrator and/or a printer. The storage unit 1908 may include, but is not limited to, a magnetic disk and an optical disk. The communication unit 1909 allows the computer system 1900 to exchange information/data with other devices through a network such as Internet, and may include but is not limited to a modem, a network card, an infrared communication device, a wireless communication transceiver and/or a chipset, such as a Bluetooth^{™} device, a WiFi device, a WiMax device, a cellular communication device and/or the like.

The computing unit 1901 may be various general and/or special processing components with processing and computing capabilities. Some examples of the computing unit 1901 include, but are not limited to, a central processing unit (CPU), a graphics processing unit (GPU), various specialized artificial intelligence (AI) computing chips, various computing units running a machine learning model algorithm, a digital signal processor (DSP), and any suitable processor, controller, microcontroller and the like. The computing unit 1901 performs various methods and processes described above. For example, in some embodiments, the above-described method disclosed in embodiment of the present invention may be implemented as a computer software program, which is tangibly embodied in a machine-readable medium, for example, the storage unit 1908. In some embodiments, some or all of the computer programs may be loaded and/or installed on the electronic device 1900 via the ROM 1902 and/or the communication unit 1909. In some embodiments, the computing unit 1901 may be configured to perform the above-described method disclosed in the embodiment of the present invention through any other suitable means (for example, by means of firmware).

The embodiment of the present invention also provides a computer-readable storage medium, where the instructions in the computer-readable storage medium when executed by a processor of the electronic device cause the electronic device to perform the above-described method disclosed in the embodiment of the present invention.

The computer-readable storage medium in the embodiment of the present invention may be a tangible medium, which may contain or store a program for use by the instruction execution system, apparatus, or device or use in combination with the instruction execution system, apparatus, or device. The computer-readable storage medium may include, but is not limited to, an electronic, magnetic, optical, electromagnetic, infrared, or semiconductor system, device or device, or any suitable combination thereof. More specifically, the above-described computer-readable storage medium may include an electrical connection based on one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

The above-described computer-readable medium may be included in the above-described electronic device; or may also exist alone without being assembled into the electronic device.

The embodiment of the present invention also provides a computer program product including a computer program that, when executed by a processor implements the above-described method disclosed in the embodiment of the present invention.

In the embodiment of the present invention, the computer program code for performing the operations of the present invention may be written in one or more programming languages or a combination thereof. The above-described programming languages include but are not limited to object-oriented programming languages, such as Java, Smalltalk, and C++, and also include conventional procedural programming languages, such as "C" language or similar programming languages. The program code may be executed entirely on the user's computer, partly on the user's computer, executed as an independent software package, partly on the user's computer and partly executed on a remote computer, or entirely executed on the remote computer or server. In the instance involving a remote computer, the remote computer may be connected to the user's computer through any type of network (including a local area network (LAN) or a wide area network (WAN)), or may be connected to an external computer.

The flow charts and block diagrams in the accompanying drawings illustrate the possibly implemented architectures, functions, and operations of the system, method, and computer program product according to various embodiments of the present invention. In this regard, each block in the flow chart or block diagram may represent a module, a program segment, or a part of code, where the module, the program segment, or the part of code contains one or more executable instructions for realizing a specified logic function. It should also be noted that, in some alternative implementations, the functions marked in the block may also occur in a different order from the order marked in the accompanying drawings. For example, two blocks shown in succession which may actually be executed substantially in parallel, may sometimes also be executed in a reverse order, depending on the functions involved. It is also to be noted that each block in the block diagram and/or flow chart, and a combination of the blocks in the block diagram and/or flow chart, may be implemented by a dedicated hardware-based system that performs the specified functions or operations, or may be implemented by a combination of dedicated hardware and computer instructions.

The modules, components, or units involved in the described embodiments of the present invention may be implemented in software or hardware. The names of the modules, components or units do not constitute a limitation on the modules, components or units themselves under certain circumstances.

The functions described hereinabove may be performed at least in part by one or more hardware logic components. For example, without limitation, the exemplary hardware logic components that may be used include: a Field Programmable Gate Array (FPGA), an Application Specific Integrated Circuit (ASIC), an Application Specific Standard Product (ASSP), a System on Chip (SOC), a Complex Programmable Logical device (CPLD) and the like.

The above description is only an explanation of some embodiments of the present invention and the applied technical principles. Those skilled in the art should understand that the scope of disclosure involved in the present invention is not limited to the technical solutions formed by the specific combination of the above-described technical features, and at the same time should also cover other technical solutions formed by arbitrarily combining the above-described technical features or equivalent features thereof without departing from the above-described inventive concept. For example, the above-described features and the technical features disclosed in the present invention (but not limited thereto) having similar functions are replaced with each other to form a technical solution.

Although some specific embodiments of the present invention have been described in detail by way of examples, those skilled in the art should understand that the above examples are only for the purpose of illustration and are not intended to limit the scope of the present invention. It should be understood by those skilled in the art that modifications to the above embodiments may be made without departing from the scope and spirit of the present invention. The scope of the present invention is limited by the appended claims.

## Claims

1. A video processing method, comprising:
determining at least one material and description information of the material for a target object in response to receiving a first request for the target object, wherein the first request is a request to perform information spreading for the target object, the target object has attribute information, the material has description information, and the description information is configured to represent a feature of the material;
determining at least one source video for the target object based on a first matching rule, wherein the at least one source video comprises at least one target implantable area, and the at least one target implantable area is matched with the at least one material of the target object; and
generating a synthesized video by implanting the material of the target object into the target implantable area of the source video matched therewith.

2. The method according to claim 1, after generating a synthesized video by implanting the material of the target object into the target implantable area of the source video matched therewith, further comprising:
recommending at least one synthesized video based on a preset recommendation strategy, wherein the recommendation strategy is related to a video history data and a search history data of an user.

3. The method according to claim 1, wherein the step of generating a synthesized video by implanting the material of the target object into the target implantable area of the source video matched therewith further comprises:
a step of rendering the synthesized video, wherein the rendering comprises at least one of the following: raster rendering, ray casting, ray tracing and neutral radiation field rendering.

4. The method according to one of claims 1 to 3, before the step of determining at least one source video for a target object based on a first matching rule, comprising:
performing video segmentation on the source video to obtain a plurality of video segments;
segmenting the video segment to obtain a plurality of candidate areas and feature labels thereof; and
determining an implantable area and a feature label thereof based on the candidate area.

5. The method according to claim 4, wherein the step of determining at least one source video for a target object based on a first matching rule comprises:
calculating a first matching degree between each feature label of the implantable area and each attribute information of the target object;
calculating a second matching degree between each feature label of the implantable area and each description information of the material; and
determining the at least one source video and the target implantable area based on the first matching degree and the second matching degree.

6. A video processing method, comprising:
determining an implantable area in a target source video and a feature label corresponding to the implantable area in response to receiving a processing request for the target source video; wherein the processing request is a request to perform object implantation for the target source video; and the feature label is configured to represent a feature of the implantable area;
determining at least one implantable object for the target source video based on a second matching rule, wherein the implantable object comprises at least one target material, and the target material is matched with at least one implantable area in the target source video; and
generating a synthesized video by implanting a material of a target object into a target implantable area of a source video matched therewith.

7. A video processing apparatus, comprising:
a first determining module configured to determine at least one material and description information of the material for a target object in response to receiving a first request for the target object, wherein the first request is a request to perform information spreading for the target object, the target object has attribute information, the material has description information, and the description information is configured to represent a feature of the material;
a first matching module configured to determine at least one source video for the target object based on a first matching rule, wherein the at least one source video comprises at least one target implantable area, and the at least one target implantable area is matched with the at least one material of the target object; and
a synthesizing module configured to generate a synthesized video by implanting the material of the target object into the target implantable area of the source video matched therewith.

8. A video processing apparatus, comprising:
a first determining module configured to determine an implantable area in a target source video and a feature label corresponding to the implantable area in response to receiving a processing request for the target source video; wherein the processing request is a request to perform object implantation for the target source video; and the feature label is configured to represent a feature of the implantable area;
a second matching module configured to determine at least one implantable object for the target source video based on a second matching rule, wherein the implantable object comprises at least one target material, and the target material is matched with at least one implantable area in the target source video; and
a synthesizing module configured to generate a synthesized video by implanting a material of a target object into a target implantable area of a source video matched therewith.

9. An electronic device, comprising:
at least one processor;
a memory for storing instructions executable by the at least one processor;
wherein the at least one processor is configured to execute the instructions to implement the method according to any of claims 1 to 6.

10. A computer-readable storage medium having a computer program stored thereon, **characterized in that** when the computer program is executed by a processor, implementing the method according to any of claims 1 to 6.

11. A computer program product comprising a computer program, **characterized in that** the computer program, when executed by a processor, implements the method according to any of claims 1 to 6.
